# EUROPEAN PATENT SPECIFICATION

(11) **EP 0 873 373 B1**
(45) Date of publication and mention of the grant of the patent: **29.12.2004**
(21) Application number: 96941607.2
(22) Date of filing: 28.11.1996
(51) Int. Cl.: C08K 3/02, C08J 5/18, A01G 9/14

(54) **A FILM FOR USE AS A COVERING IN AGRICULTURE AND A METHOD FOR ITS MANUFACTURE**
FILM ZUM GEBRAUCH ALS ABDECKUNG IN DER LANDWIRTSCHAFT SOWIE VERFAHREN ZU SEINER HERSTELLUNG
FILM UTILE EN TANT QU'ELEMENT DE COUVERTURE DANS L'AGRICULTURE ET PROCEDE DE FABRICATION ASSOCIE

(30) Priority: 06.12.1995 IT PD950237
(43) Date of publication of application: 28.10.1998
(73) Proprietor: P.A.T.I.S.P.A., 31020 S. Zenone degli Ezzelini (IT)
(72) Inventor: ZANON, Domenico, I-31020 S. Zenone degli Ezzelini (IT)
(74) Representative: Cantaluppi, Stefano
(86) International application number: PCT/EP1996/005259
(87) International publication number: WO 1997/020887

(56) References cited:
- EP-A- 0 300 060
- FR-A- 2 483 583
- GB-A- 1 410 979
- JP-A- 2 235 942
- JP-A- 6 328 438

## Description

### Technical Field

The invention relates to a film of plastics material for use, in sheets of adequate thickness, for covering greenhouses or for application directly to the ground to cover cultivated areas; in the latter case a similar covering called mulch is also known.

### Background Art

As is common knowledge, in such covering applications, the effect achieved by the plastics material is that it simultaneously constitutes both a protection against atmospheric agents, particularly during cold periods of the year, and a filter for solar radiation. It is hardly necessary to point out that a greenhouse effect is achieved by the selective behaviour towards radiation of the plastics materials used; they are transparent to luminous solar radiation during the day whereas they prevent the passage of radiation in the infra-red range transmitted from the ground during the night.

A property required of materials used in the coverings in question is that of providing a diffused light where they are applied; in fact, according to some studies, diffused light conditions favour the growth of plants and prevent damage to the plants caused by overheating of the environment, also bringing about a considerable toning-down of temperature variations in the microclimate inside the greenhouse over the period of a day, to the benefit of the uniformity of growth of the underlying crop.

The materials used for forming the films are generally polymers which, in order to achieve and/or improve their capability to bring about a good greenhouse effect and to provide a diffused light as required, are combined with certain additives which may vary according to the type of polymer actually used.

Amongst the additives used, those containing a certain quantity of mineral salts, generally talc, kaolin, and phosphites, together with calcium and magnesium or aluminium phosphates, should be mentioned.

An example in confirmation of the foregoing is represented by international application PCT/EP/93/02380 published under the number W094/05727 (proprietors: HYPLAST; MERCK PATENT); as well as examining the prior art as mentioned above, this application describes and claims a composite material which is intended to produce some specific results with regard to the screening of some undesired radiation wavelengths as well as favouring diffusion of light.

However, the use of the additives according to the teachings drawn from the prior art has some contraindications which limit its effectiveness; in fact, it has been found that the use of mineral salts as additives reduces the percentage of radiation which passes through the plastics film, since the particles formed thereby and dispersed in the basic polymer interfere with the radiation, causing some of it to be reflected.

### Disclosure of Invention

The object of the invention is to prevent this problem; this object is achieved, according to the invention, by a film, characterized in that it comprises a layer based on polymeric material in which bubbles of gas are dispersed.

In fact, it has been found that, by virtue of the presence of these bubbles, the solar radiation striking the surface of the film is diffracted and deflected by the interface between the polymeric material and each bubble; this double diffraction and deflection effect involves the splitting of the radiation into a plurality of beams with different angulations, thus creating the desired light diffusion conditions without, however, having the adverse effect of reflecting radiation.

It has also been found that, although the film of the invention retains high transparency values (greater than 86%), its effect modifies the direct radiation which occurs in the wavelength band corresponding to visible light and to so-called short infra-red radiation, that is, wavelengths between 380 and 2000 nm, thus attenuating the maximum temperature in the covered environment, with considerable beneficial effects on the plants grown therein.

The invention also relates to a method of manufacturing the film mentioned above, the steps of which are set out in the following claims.

### Best Mode for Carrying out the Invention

For a better understanding of the invention, of further characteristics thereof and of advantages resulting therefrom, a description of an embodiment of the method of producing the film mentioned is given below with reference to the single appended drawing, which shows schematically apparatus for this production.

More particularly, the apparatus is of the type normally used for the continuous production of plastics films or sheets and only those parts which are of interest for the purposes of an understanding of the invention will be considered below in general terms, whilst reference may be made to specialized technical manuals for the details.

The apparatus in question therefore includes a cylindrical extruder body 1 in which a screw acts to advance the polymeric material from an input end, where a hopper 2 is situated, to an extrusion head 4 at the opposite end of the body 1. Downstream of the extrusion head is a device 5 of known type for forming and recovering the film P which is then wound on reels by winding apparatus 7.

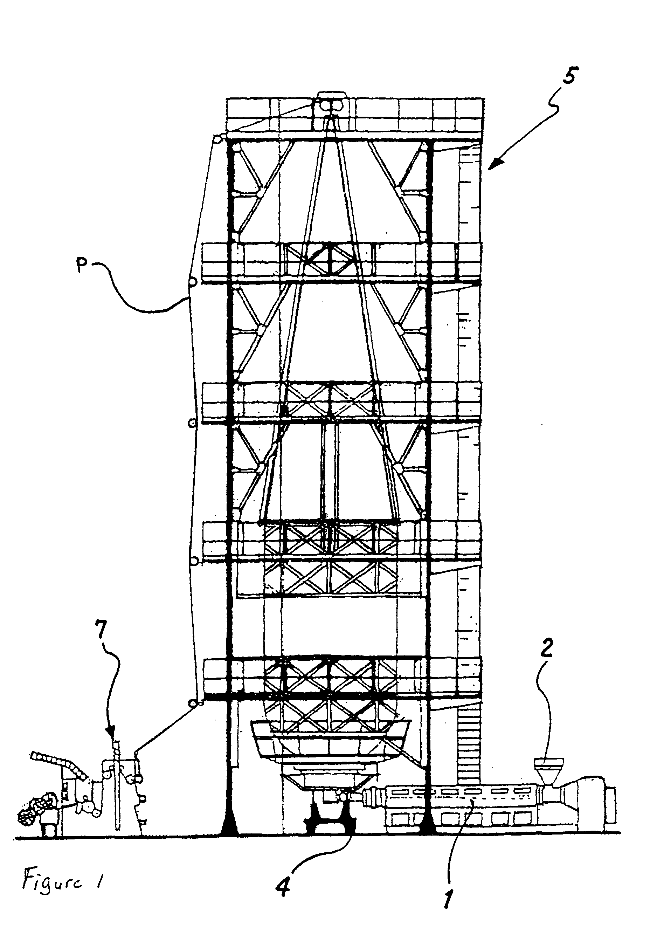

The apparatus also has heating means, for example, in the form of electrical resistors, not shown in the drawings, for heating the polymeric material in the extruder body 1, as well as regulation means for controlling the production process according to the conditions provided for, which are explained in greater detail below. The regulation means are also not shown in the drawing.

In order to produce the film P of the invention, a basic polymer is fed, in granular form, from the hopper 2 into the extruder body 1; amongst the polymeric materials which may usefully be used for the purposes of the invention, polyethylene, ethylene-vinyl acetate copolymer (EVA), polyvinyl chloride, polymethyl methacrylate, polypropylene, polyethylene terephthalate, (ETFE), PEP, divinyldiformalmide, (PVDF) may be mentioned. Naturally, mixtures of the materials in question may also be used.

So-called endothermic additives, that is, additives comprising organic compounds such as citric acid and bicarbonates (for example, the products known commercially as HYDROCEROL), which can decompose at temperatures of between 120 and 300°C liberating gases such as carbon dioxide or nitrogen, are added to the basic polymeric material.

The concentration of these additives in relation to the composition constituted by the additives and the premixed polymeric material is preferably between 0.1 and 0.5%; moreover, to simplify mixing operations, the extrusion temperature advantageously remains within the range between 175 and 205°C.

The extrusion of the polymeric material combined with the decomposed additives produces a film P in which the gases liberated by the decomposition of the additives form small bubbles dispersed in the polymeric layer of the film. In this connection, it is appropriate to point out that the temperature, along the extruder, of the mass to be extruded must be neither too low, since in that case sufficient degradation of the additives would not be achieved and there would therefore be few bubbles of smaller dimensions than those required, nor too high, since the decomposition of the additives would take place too quickly and at the wrong time so as to produce excessively large gas bubbles. Moreover, it should be pointed out that, if the temperature of the extrusion head 4 is kept below that inside the extrusion body 1, the bubbles formed can be kept within the mass to be extruded, thus preventing the gas from escaping from the polymer as it is output from the extrusion head.

The bubbles should not in fact be too small since, in this case, they would not have the correct effect on the solar radiation as described above, but neither should they be too large since, in the that case, they would reach the surface of the film, with the result that their gas would leak into the atmosphere.

The dimensions of the bubbles should therefore be less than 50% of the thickness of the film.

It is pointed out that leakage of gas due to excessive bubble size could have the adverse effect of a decrease in the greenhouse effect achieved by the film, since this effect is advantageously influenced by the presence of the gas, as will be explained further below.

Amongst the other advantages achieved by the film of the invention, the fact that it has a lower weight, possibly up to 20-25% less, than a conventional film for a given thickness, should also be pointed out.

As an alternative to the embodiment of the method described above, the bubbles may also be formed in the plastics film by the injection of gases such as nitrogen or chlorofluoro compounds (CFCs) into the molten polymeric material. In this case, the additives mentioned are not used in the production process and the plant described above has a suitable pump for injecting the above-mentioned gases into the extruder body 1; in this variant, it is also advisable to keep the temperature of the extrusion head below that inside the body 1, for the reasons already explained.

The effects and the advantages of the film produced according to this variant of the method in any case remain unchanged and reference may therefore be made to the foregoing.

To resume the foregoing description, it should be pointed out that an important effect achieved by the film of the invention lies in the improved greenhouse effect which it can achieve in given conditions, in comparison with a normal film; this improvement, which may reach values of the order of 10-15%, is achieved by virtue of the presence in the gas of elements such as nitrogen, oxygen, chlorine, fluorine, bromine or phosphorus, which can prevent the passage of infra-red radiation.

It has also been noted that the film of the invention has a particularly improved effect in very sunny regions, such as southern regions and even tropical or sub-tropical regions. In greenhouses covered with the film of the invention it has been noted that the day temperature is maintained within sufficiently low limits to avoid that an excessive heating could damage the plants while at the same time heat dispersion is prevented during the night. This is probably due to the relatively low permeability of the film to the infra-red radiation which is prevented (in part) from entering the greenhouse during the day but is also prevented form exiting the greenhouse during the night.

It has also been noted that the film of this invention, when manufactured in a composition according to claim 3, is particularly resilient and flexible and adapted for optimal covering of greenhouses.

Finally, alternatives to the description of the invention set out up to now should not be excluded; by way of example, it is pointed out that, in addition to the endothermic additives already mentioned, the polymeric material used to manufacture the film may also be enriched by other components which contribute to the properties of the film produced, such as, for example, surfactants which prevent the formation of drops on the film in use, or stabilizers with respect to ultraviolet radiation, as well as any other components normally used in the manufacture of films.

## Claims

1. A film for covering of greenhouses and similar agricultural structures, the film being transparent to visible light and substantially opaque to infrared radiation emitted from the ground and including a polymeric layer containing gas bubbles dispersed within the thickness of the polymeric layer and **characterised in that** said bubbles, in order to improve the opacity of the film to said infrared radiation, have a maximum size of less than half the thickness of said layer.

2. A film according to Claim 1, in which the gas contained in the bubbles includes one or more of the elements nitrogen, oxygen, chlorine, fluorine, bromine and phosphorus.

3. A film according to any one of Claims 1 and 2, in which the polymeric material comprises one or more of polyethylene, ethylene-vinyl acetate copolymer (EVA), polyvinyl chloride, polymethyl methacrylate, polypropylene, ETFE, PEP, PVDF.

4. A film according to any one of the preceding claims, comprising surfactants and/or stabilizers with respect to ultraviolet rays.

5. A method of manufacturing a film according to any one of Claims 1 to 5 by extrusion, **characterized in that** it comprises the following steps:
- causing gas bubbles to form in the molten polymeric material,
- extruding the polymeric material produced at a temperature below that at which the bubbles are formed.

6. A method according to Claim 5, **characterized in that** the bubbles are formed by the mixing of the polymeric material with endothermic additives based on organic compounds having decomposition temperature of between 120 and 300°C, and **in that** the extrusion temperature is between 175 and 200°C.

7. A method according to Claim 6, **characterized in that** the endothermic additives are based on organic compounds such as citric acid and bicarbonates.

8. A method according to Claim 5, **characterized in that** the bubbles are formed by the injection of one or more gases selected from nitrogen and chlorofluoro compounds (CFCs) into the molten polymeric material.

9. A greenhouse for cultivation, **characterized in that** it comprises a covering according to any one of Claims 1 to 4.

## Patentansprüche

1. Folie für das Abdecken von Gewächshäusern und ähnlichen Agrarstrukturen, wobei die Folie für durchscheinendes Licht transparent und im Wesentlichen für Infrarotstrahlung undurchlässig ist, die von der Erde emittiert wird, und wobei die Folie eine Polymerschicht aufweist, die Gasbläschen enthält, die in der Dicke der Polymerschicht fein verteilt sind, und die **dadurch gekennzeichnet ist, dass** die genannten Gasbläschen zur Verbesserung der Opazität bzw. Folienundurchlässigkeit bezüglich der Infrarotstrahlung eine maximale Größe aufweisen, die kleiner als die Dickenhälfte der Schicht ist.

2. Folie gemäß Anspruch 1, in der das in den Bläschen enthaltene Gas eines oder mehrere der Elemente Stickstoff, Sauerstoff, Chlor, Fluor, Brom und Phosphor aufweist.

3. Folie gemäß einen der Ansprüche 1 und 2, in der das Polymermaterial aus einem oder mehreren Teilen Polyethylen, Ethylen-Vinylacetat-Copolymerisat (EVA), Polyvinylchlorid, Polymethylmethacrylat, Polypropylen, ETFE, PEP, PVDF besteht.

4. Folie gemäß einen der voranstehenden Ansprüche, die ein Oberflächen abgrenzendes Mittel und/oder Stabilisierungsmittel bezüglich der Ultraviolettstrahlen aufweist.

5. Verfahren zur Herstellung einer Folie gemäß einem der Ansprüche 1 bis 5 durch Extrusion, **dadurch gekennzeichnet, dass** es die folgenden Schritte umfasst:
- Erzeugen von Gasbläschen zur Ausbildung in dem geschmolzenen Polymermaterial; Extrudieren des Polymermaterials, das bei einer Temperatur hergestellt worden ist, unterhalb der die Gasbläschen gebildet werden.

6. Verfahren gemäß Anspruch 5, **dadurch gekennzeichnet, dass** die Gasbläschen durch das Mischverhältnis des Polymermaterials mit endothermischen Zusatzstoffen gebildet werden, die auf organischen Verbindungen basieren, welche eine Zersetzungstemperatur zwischen 120° und 300° C aufweisen, und **dadurch gekennzeichnet, dass** die Extrusionstemperatur zwischen 175° und 200° C liegt.

7. Verfahren gemäß Anspruch 6, **dadurch gekennzeichnet, dass** die endothermischen Zusatzstoffe auf organischen Verbindungen basieren, wie zum Beispiel Zitronensäure und Natronzyklen.

8. Verfahren gemäß Anspruch 5, **dadurch gekennzeichnet, dass** die Gasbläschen durch Einspritzen/Freisetzen von einem oder von mehreren Gasen gebildet werden, die aus Stickstoff- und Fluorchlorstoffverbindungen (CFCs) gewählt sind, in das/dem geschmolzene/n Polymermaterial.

9. Gewächshaus für den Pflanzenanbau, **dadurch gekennzeichnet, dass** es eine Abdeckung gemäß einem der Ansprüche 1 bis 4 aufweist.

## Revendications

1. Film de couverture de serres et de structures agricoles similaires, le film étant transparent à la lumière visible et sensiblement opaque aux radiations infrarouges émises par le sol et comprenant une couche polymère contenant des bulles de gaz dispersées dans l'épaisseur de la couche polymère et **caractérisé en ce que** lesdites bulles, dans le but d'améliorer l'opacité du film auxdites radiations infrarouges, ont une taille maximale inférieure à la moitié de l'épaisseur de ladite couche.

2. Film selon la revendication 1, dans lequel le gaz contenu dans les bulles comprend un ou plusieurs des éléments azote, oxygène, chlore, fluor, brome et phosphore.

3. Film selon l'une quelconque des revendications 1 et 2, dans lequel le matériau polymère comprend un ou plusieurs des composants polyéthylène, copolymère d'acétate de vinyléthylène (EVA), polychlorure de vinyle, polyméthacrylate de méthyle, polypropylène, ETFE, PEP, PVDF.

4. Film selon l'une quelconque des revendications précédentes, comprenant des surfactants et/ou des stabilisateurs en ce qui concerne les rayons ultraviolets.

5. Procédé de fabrication d'un film selon l'une quelconque des revendications 1 à 5 par extrusion, **caractérisé en ce qu'**il comprend les étapes consistant à :
donner lieu à la formation de bulles de gaz dans le matériau polymère en fusion,
extruder le matériau polymère produit à une température inférieure à celle à laquelle les bulles sont formées.

6. Procédé selon la revendication 5, **caractérisé en ce que** les bulles sont formées par mélange du matériau polymère avec des additifs endothermiques basés sur des composés organiques ayant une température de décomposition comprise entre 120 et 300°C, et **en ce que** la température d'extrusion est comprise entre 175 et 200°C.

7. Procédé selon la revendication 6, **caractérisé en ce que** les additifs endothermiques sont basés sur des composés organiques tels que de l'acide citrique et des bicarbonates.

8. Procédé selon la revendication 5, **caractérisé en ce que** les bulles sont formées par injection d'un ou plusieurs gaz choisis parmi l'azote et les composés chlorofluorés (CFCs) dans le matériau polymère en fusion.

9. Une serre pour culture, **caractérisée en ce qu'**elle comprend une couverture selon l'une quelconque des revendications 1 à 4.
